(19) **Europäisches Patentamt / European Patent Office / Office européen des brevets**

(11) **EP 4 694 388 A1**

(12) **EUROPEAN PATENT APPLICATION**
published in accordance with Art. 153(4) EPC

(43) Date of publication:
**11.02.2026 Bulletin 2026/07**

(21) Application number: **24778161.0**

(22) Date of filing: **28.03.2024**

(51) International Patent Classification (IPC):
**H04W 52/18** (2009.01)

(52) Cooperative Patent Classification (CPC):
**H04W 8/24; H04W 52/14; H04W 52/18; H04W 52/36**

(86) International application number:
**PCT/CN2024/084494**

(87) International publication number:
**WO 2024/199375 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310365094**

(71) Applicant: **Huawei Technologies Co., Ltd.**
**Shenzhen, Guangdong 518129 (CN)**

(72) Inventors:
- **HU, Dan**
  **Shenzhen, Guangdong 518129 (CN)**
- **LIU, Ye**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) This application provides a communication method and apparatus, to flexibly adjust a transmit power for uplink transmission, and adjust performance of the uplink transmission. The method includes: A terminal device sends first information, where the first information indicates a power control capability supported when the terminal device sends first uplink transmission in an uplink multiple antenna transmission UL MIMO mode in a first frequency band; and when the terminal device supports a first power class and a frequency corresponding to the first frequency band is lower than 1 GHz, the terminal device may determine a transmit power for the first uplink transmission based on the power control capability, so that the transmit power for the first uplink transmission is not limited by a maximum UE power corresponding to the first power class.

```
Terminal device                          Network device
     |                                          |
     |  S201: Send first information            |
     |  (power control capability)              |
     |----------------------------------------->|
     |                                          |
 ┌──────────────────────────┐                   |
 │ S202: Determine a first  │                   |
 │ transmit power for first │                   |
 │ uplink transmission      │                   |
 │ based on the power       │                   |
 │ control capability       │                   |
 └──────────────────────────┘                   |
     |                                          |
     |  S203: Send the first uplink             |
     |  transmission at the first transmit power|
     |----------------------------------------->|
     |                                          |
```

FIG. 2A

**Description**

CROSS-REFERENCE TO RELATED APPLICATIONS

This application claims priority to Chinese Patent Application No. 202310365094.1, filed with the China National Intellectual Property Administration on March 31, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Currently, in a 5G new radio access technology (new radio access technology, NR), for an operating frequency of a terminal device, a power class supported by the operating frequency is defined, and for different power classes, different maximum UE powers are defined. For example, some operating bands of the terminal device support a power class 3, and a maximum UE power corresponding to the power class 3 is 23 dBm; and some other operating bands of the terminal device support a power class 2, and a maximum UE power corresponding to the power class 2 is 26 dBm.

Because maximum UE powers corresponding to different power classes affect calculation of maximum transmission powers of a terminal, when the terminal sends uplink transmission in an uplink multiple antenna transmission (Uplink Multiple Antenna transmission, UL MIMO) mode in a frequency band lower than 1 GHz, the maximum transmission power of the terminal is limited by a maximum UE power corresponding to a power class supported by the frequency band, resulting in poor performance of the uplink transmission. Therefore, how to improve performance of the uplink transmission becomes an urgent problem to be resolved.

SUMMARY

This application provides a communication method and apparatus, to flexibly adjust a transmit power for uplink transmission, and adjust performance of the uplink transmission.

According to a first aspect, an embodiment of this application provides a communication method. The method includes: A terminal device sends first information, where the first information indicates a power control capability supported when the terminal device sends first uplink transmission in an uplink multiple antenna transmission UL MIMO mode in a first frequency band, the terminal device supports a first power class, and a frequency corresponding to the first frequency band is lower than 1 GHz; then, the terminal device determines a first transmit power for the first uplink transmission based on the power control capability; and finally the terminal device sends the first uplink transmission at the first transmit power in the UL MIMO mode in the first frequency band.

In this embodiment of this application, the terminal device can report, to a network device, the power control capability supported when the terminal device sends the first uplink transmission in the UL MIMO mode in the first frequency band. In this way, when the terminal device supports the first power class and the frequency corresponding to the first frequency band is lower than 1 GHz, the terminal device can determine a transmit power for uplink transmission of the terminal device based on the power control capability, and flexibly adjust the transmit power for the uplink transmission, so that the transmit power for the uplink transmission is not limited by a maximum UE power corresponding to the first power class, to adjust performance of the uplink transmission.

In a possible design, the power control capability includes increasing a transmission power of the terminal device when the terminal device supports the UL MIMO mode in the first frequency band. The "transmission power" may be understood as a transmit power for the uplink transmission of the terminal device. In this design, the power control capability includes increasing the transmission power of the terminal device when the terminal device supports the UL MIMO mode in the first frequency band, so that the terminal device can use a large transmit power when sending the uplink transmission in the UL MIMO mode in the first frequency band, to improve performance of the uplink transmission.

In a possible design, a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and a maximum UE power corresponding to the first power class is lower than a maximum UE power corresponding to the second power class. The MPR and the A-MPR are parameters for determining the transmit power for the uplink transmission of the terminal device. The value range of the MPR corresponding to the first power class is greater than the value range of the MPR corresponding to the second power class, and the value range of the A-MPR corresponding to the first power class is greater than the value range of the A-MPR corresponding to the second power class. Therefore, in this design, a value range of an MPR corresponding to a power class (namely, the first power class) with a lower maximum UE power is set to a value range of an MPR corresponding to a power class (namely, the second power class) with a lower maximum UE power, and/or a value range of an A-MPR corresponding to a power class with a lower maximum UE power is set to a value range of an A-MPR corresponding to a power class with a lower maximum UE power, so that the terminal device supporting the first power class can use a large transmit power when sending the uplink transmission, to improve performance of the uplink transmission.

In a possible design, the maximum UE power $P_{PowerClass}$ corresponding to the first power class is 23 dBm, and the maximum UE power corresponding to the second power class is 26 dBm. The maximum UE power $P_{PowerClass}$ corresponding to the first power class is 23 dBm, that is, the first power class may be a power class 3; and the maximum UE power corresponding to the second power class is 26 dBm, that is, the second power class may be a power class 2. In other words, in this design, when sending the first uplink transmission in the UL MIMO mode in the frequency band lower than 1 GHz, the terminal device supporting a power class 3 can determine the transmit power for the first uplink transmission by using the value range of the MPR corresponding to the power class 2 and/or the value range of the A-MPR corresponding to the power class 2, to obtain a large transmit power, and improve performance of the first uplink transmission.

In a possible design, the method further includes: The terminal device receives second information, where the second information indicates a first power value $P_{EMAX, c}$ configured by a network device for the terminal device; the first power value is used to determine a maximum transmission power of second uplink transmission; and the second uplink transmission is uplink transmission of the terminal device before sending of the first information; or the second uplink transmission is uplink transmission sent by the terminal device in a second frequency band, and a frequency corresponding to the second frequency band is higher than or equal to 1 GHz; or the second uplink transmission is uplink transmission sent by the terminal device in a non-UL MIMO mode in the first frequency band; and correspondingly the terminal device increases the first power value $P_{EMAX, c}$ by 3 dB, to obtain an increased power value, where the increased power value is used to determine the first transmit power. In this design, the terminal device increases, by 3 dB, the first power value PEMAX, c configured by the network device for the terminal device, to obtain the increased power value, and uses the increased power value as a parameter for determining the transmit power (namely, the first transmit power) of the first uplink transmission, so that the terminal device can obtain the large transmit power when sending the first uplink transmission, to improve performance of the first uplink transmission.

In a possible design, a power class adjustment value $\Delta P_{PowerClass}$ of the terminal device is -3 dB. The power class adjustment value $\Delta P_{PowerClass}$ of the terminal device is a parameter of the transmit power (namely, the first transmit power) of the first uplink transmission. Therefore, in this design, a value of the power class adjustment value $\Delta P_{PowerClass}$ of the terminal device is adjusted, so that the terminal device can obtain the large transmit power when sending the first uplink transmission, to improve performance of the first uplink transmission.

In this embodiment of this application, the MPR of the second power class corresponding to the first power class is different when the terminal device supports transmit diversity TxD and when the terminal device does not support TxD.

In a possible design, when the power control capability includes that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and the maximum UE power corresponding to the first power class is lower than the maximum UE power corresponding to the second power class. In this design, when the terminal device supports the transmit diversity TxD, the dual radio frequency chain MPR of the second power class corresponding to the first power class can be used to increase a transmit power, to improve performance of the uplink transmission.

In a possible design, when the power control capability includes that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and the maximum UE power corresponding to the first power class is lower than the maximum UE power corresponding to the second power class. In this design, when the terminal device does not support the transmit diversity TxD, the single radio frequency chain MPR of the second power class corresponding to the first power class can be used to increase a transmit power, to improve performance of the uplink transmission.

In a possible design, that the terminal device determines the first transmit power for the first uplink transmission based on the power control capability includes: The terminal device receives third information, where the third information indicates that the power control capability takes effect; and when the power control capability takes effect, the terminal device determines the first transmit power for the first uplink transmission based on the power control capability. In this design, only when receiving the third information indicating that the power control capability takes effect, the terminal device determines the first transmit power for the first uplink transmission based on the power control capability, so that the first uplink transmission meets a communication requirement of the network device.

In a possible design, the first transmit power is higher than or equal to a first value $P_{CMAX\_L, f, c}$ and lower than or equal to a second value $P_{CMAX\_H, f, c}$, where the first value $P_{CMAX\_L, f, c}$ and the second value $P_{CMAX\_H, f, c}$ satisfy the following formulas:

$P_{CMAX\_L, f, c} = MIN\{(P_{EMAX, c}+n)-\Delta T_{C, c}, (P_{PowerClass}-\Delta P_{PowerClass})-MAX(MAX(MPR_c+\Delta MPR_c, A-MPR_c)+\Delta T_{IB, c}+\Delta T_{C, c}+\Delta T_{RxSRS}, P-MPR_c)\}$;

and

$$P_{CMAX\_H, f, c} = MIN\{(P_{EMAX, c}+n), P_{PowerClass}-\Delta P_{PowerClass}\}.$$

Herein, $P_{PowerClass}$ is a maximum UE power corresponding to the first power class, $P_{EMAX, c}$ is the first power value configured by the network device for the terminal device, $\Delta P_{PowerClass}$ is the power class adjustment value of the terminal device, $MPR_c$ is the MPR of the second power class, and $\Delta MPR_c$ is a predefined value; and $A-MPR_c$ is the A-MPR of the second power class, $P-MPR_c$ represents a preset maximum output power reduction, $\Delta T_{C, c}$ is a predefined value, $\Delta T_{IB, c}$ represents an additional tolerance for a serving cell c, and $\Delta T_{RxSRS}$ is related to an antenna port and an antenna configuration. Optionally, a value of n includes 1, 2, and 3.

According to a second aspect, an embodiment of this application provides a communication method. The method includes: A network device receives first information, where the first information indicates a power control capability supported when a terminal device sends first uplink transmission in an uplink multiple antenna transmission UL MIMO mode in a first frequency band, the terminal device supports a first power class, and a frequency corresponding to the first frequency band is lower than 1 GHz; and the network device receives the first uplink transmission.

In a possible design, the power control capability includes increasing a transmission power of the terminal device when the terminal device supports the UL MIMO mode in the first frequency band.

In a possible design, a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and a maximum UE power corresponding to the first power class is lower than a maximum UE power corresponding to the second power class.

In a possible design, the maximum UE power $P_{PowerClass}$ corresponding to the first power class is 23 dBm, and the maximum UE power corresponding to the second power class is 26 dBm.

In a possible design, a power class adjustment value $\Delta P_{PowerClass}$ of the terminal device is -3 dB.

In a possible design, when the power control capability includes that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and the maximum UE power corresponding to the first power class is lower than the maximum UE power corresponding to the second power class.

In a possible design, when the power control capability includes that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and the maximum UE power corresponding to the first power class is lower than the maximum UE power corresponding to the second power class.

In a possible design, the method further includes: The network device sends third information, where the third information indicates that the power control capability takes effect.

According to a third aspect, an embodiment of this application provides a communication apparatus. The apparatus may be a terminal device, or may be a chip in a terminal device. The apparatus may include a processing unit, a transceiver unit, and a receiving unit. It should be understood that a sending unit and the receiving unit herein may alternatively be a transceiver unit. When the apparatus is the terminal device, the processing unit may be a processor, and the sending unit and the receiving unit may be a transceiver. The communication device may further include a storage unit, and the storage unit may be a memory. The storage unit is configured to store instructions. The processing unit executes the instructions stored in the storage unit, so that the terminal device performs the method according to any one of the first aspect or the possible designs of the first aspect. When the apparatus is the chip in the terminal device, the processing unit may be a processor, and the sending unit and the receiving unit may be input/output interfaces, pins, circuits, or the like. The processing unit executes instructions stored in a storage unit, so that the chip performs the method according to any one of the first aspect or the possible designs of the first aspect. The storage unit is configured to store instructions. The storage unit may be a storage unit (for example, a register or a cache) in the chip, or may be a storage unit (for example, a read-only memory or a random access memory) that is in the terminal device but is located outside the chip.

According to a fourth aspect, an embodiment of this application provides a communication apparatus. The apparatus may be a network device, or may be a chip in a network device. The apparatus may include a processing unit, a transceiver unit, and a receiving unit. It should be understood that a sending unit and the receiving unit herein may alternatively be a transceiver unit. When the apparatus is the network device, the processing unit may be a processor, and the sending unit and the receiving unit may be a transceiver. The communication device may further include a storage unit, and the storage unit may be a memory. The storage unit is configured to store instructions. The processing unit executes the instructions stored in the storage unit, so that the network device performs the method according to any one of the second aspect or the possible designs of the second aspect. When the apparatus is the chip in the network device, the processing unit may be a processor, and the sending unit and the receiving unit may be input/output interfaces, pins, circuits, or the like. The processing unit executes instructions stored in a storage unit, so that the chip performs the method according to any one of the second aspect or the possible designs of the second aspect. The storage unit is configured to store instructions. The storage unit may be a storage unit (for example, a register or a cache) in the chip, or may be a storage unit (for example, a read-only memory or a random access memory) that is in the terminal device but is located outside the chip.

According to a fifth aspect, an embodiment of this application further provides a computer-readable storage medium. The computer-readable storage medium stores a computer program. When the computer program is run on a computer, the computer is enabled to perform the method according to the first aspect or the second aspect.

According to a sixth aspect, an embodiment of this application further provides a computer program product including a program. When the program is run on a computer, the computer is enabled to perform the method according to the first aspect or the second aspect.

According to a seventh aspect, a communication apparatus is provided and includes a processor, a communication interface, and a memory. The communication interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the method according to any one of the first aspect or the designs of the first aspect.

According to an eighth aspect, a communication apparatus is provided and includes a processor, a communication interface, and a memory. The communication interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the method according to any one of the second aspect or the designs of the second aspect.

According to a ninth aspect, an embodiment of this application provides a chip. The chip is coupled to a memory, to perform the method according to any one of the first aspect or the possible designs of the first aspect in embodiments of this application.

According to a tenth aspect, an embodiment of this application provides a chip. The chip is coupled to a memory, to perform the method according to any one of the second aspect or the possible designs of the second aspect in embodiments of this application.

According to an eleventh aspect, an embodiment of this application provides a chip including a communication interface and at least one processor. The processor runs to perform the method according to any one of the first aspect or the designs of the first aspect in embodiments of this application.

According to a twelfth aspect, an embodiment of this application provides a chip including a communication interface and at least one processor. The processor runs to perform the method according to any one of the second aspect or the designs of the second aspect in embodiments of this application.

According to a thirteenth aspect, an embodiment of this application further provides a communication system including the terminal device according to the first aspect and the network device according to the second aspect.

It should be understood that "coupling" in embodiments of this application indicates a direct combination or an indirect combination between two parts.

For beneficial effect of the second aspect to the thirteenth aspect, refer to related descriptions in the first aspect. Details are not described herein again.

BRIEF DESCRIPTION OF DRAWINGS

FIG. 1 is a diagram of an architecture of a communication system according to an embodiment of this application;
FIG. 2A is a schematic flowchart of a communication method according to an embodiment of this application;
FIG. 2B is a schematic flowchart of a communication method according to an embodiment of this application;

FIG. 3 is a diagram of a structure of a communication apparatus according to an embodiment of this application; and
FIG. 4 is a diagram of a structure of a communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following explains and describes technical terms in embodiments of this application.

1. Maximum UE powers are maximum UE powers corresponding to power classes defined for different operating bands of a terminal device. Different power classes further correspond to different maximum power reductions (Maximum Power Reductions, MPRs) and additional maximum power reductions (Extra-Maximum Power Reductions, A-MPRs). Specifically, in 5G NR, the terminal device operates in a frequency range (Frequency Range, FR) 1 and FR2, and the 3rd generation partnership project (the 3rd Generation Partner Project, 3GPP) defines power classes of the terminal for the two frequency ranges. FR1 may be 410 MHz to 7125 MHz, and FR2 may be 24250 MHz to 52600 MHz. For example, frequency bands of FR1 are shown in Table 1. A frequency band n14 of FR1 supports a power class 1, and a maximum UE power corresponding to the power class 1 is 31 dBm. Frequency bands n41, n77, n78, and n79 of FR1 support a power class 1.5, and a maximum UE power corresponding to the power class 1.5 is 29 dBm. Frequency bands n1, n3, n34, n39, n40, n41, n77, n78, n79, n94, n95, n97, and n104 of FR1 support a power class 2, and a maximum UE power corresponding to the power class 2 is 26 dBm. All frequency bands of FR1 support a power class 3, and a maximum UE power corresponding to the power class 3 is 23 dBm.

Table 1 UE power classes corresponding to FR1

| NR band | Class 1 (dBm) | Class 1.5 (dBm) | Class 2 (dBm) | Class 3 (dBm) |
|---|---|---|---|---|
| n1 | | | 26 | 23 |
| n2 | | | | 23 |
| n3 | | | 26 | 23 |
| n5 | | | | 23 |
| n7 | | | | 23 |
| n8 | | | | 23 |
| n12 | | | | 23 |
| n13 | | | | 23 |
| n14 | 31 | | | 23 |
| n18 | | | | 23 |
| n20 | | | | 23 |
| n24 | | | | 23 |
| n25 | | | | 23 |
| n26 | | | | 23 |
| n28 | | | | 23 |
| n30 | | | | 23 |
| n34 | | | 26 | 23 |
| n38 | | | | 23 |
| n39 | | | 26 | 23 |
| n40 | | | 26 | 23 |
| n41 | | 29 | 26 | 23 |
| n47 | | | | 23 |
| n48 | | | | 23 |
| n50 | | | | 23 |

(continued)

| NR band | Class 1 (dBm) | Class 1.5 (dBm) | Class 2 (dBm) | Class 3 (dBm) |
|---------|---------------|-----------------|---------------|---------------|
| n51 | | | | 23 |
| n53 | | | | 23 |
| n65 | | | | 23 |
| n66 | | | | 23 |
| n70 | | | | 23 |
| n71 | | | | 23 |
| n74 | | | | 23 |
| n77 | | 29 | 26 | 23 |
| n78 | | 29 | 26 | 23 |
| n79 | | 29 | 26 | 23 |
| n80 | | | | 23 |
| n81 | | | | 23 |
| n82 | | | | 23 |
| n83 | | | | 23 |
| n84 | | | | 23 |
| n85 | | | | 23 |
| n86 | | | | 23 |
| n89 | | | | 23 |
| n91 | | | | 23 |
| n92 | | | | 23 |
| n93 | | | | 23 |
| n94 | | | | 23 |
| n95 | | | 26 | 23 |
| n97 | | | 26 | 23 |
| n98 | | | 26 | 23 |
| n99 | | | | 23 |
| n100 | | | | 23 |
| n101 | | | | 23 |
| n104 | | | 26 | 23 |

It should be understood that when the terminal device applies two antenna ports to one code division multiplexing (code division multiplexing, CDM) group, the terminal device may send uplink transmission in an uplink multiple antenna transmission (Uplink Multiple Antenna transmission, UL MIMO) mode. Table 2 lists NR frequency bands of FR1 that support UL MIMO.

Table 2 NR frequency bands of FR1 that support UL MIMO

| NR operating band |
|-------------------|
| n1 |
| n2 |
| n3 |
| n7 |

(continued)

| NR operating band |
|---|
| n24 |
| n25 |
| n30 |
| n34 |
| n38 |
| n39 |
| n40 |
| n41 |
| n46 |
| n48 |
| n66 |
| n70 |
| n71 |
| n77 |
| n78 |
| n79 |
| n80 |
| n84 |
| n95 |
| n96 |
| n97 |
| n98 |
| n99 |
| n102 |

Further, when the terminal device sends the uplink transmission in the UL MIMO mode, a maximum output power of the terminal device is defined as a sum of maximum output powers of the two antenna ports. For example, UE power classes corresponding to a case in which the UE supports UL MIMO in a closed-loop spatial multiplexing mode are shown in Table 3.

Table 3 UE power classes corresponding to a case in which the terminal device supports the UL MIMO in the closed-loop spatial multiplexing mode

| NR band | Class 1.5 (dBm) | Class 2 (dBm) | Class 3 (dBm) | Class 4 (dBm) |
|---|---|---|---|---|
| n1 | | | 23 | |
| n2 | | | 23 | |
| n3 | | | 23 | |
| n7 | | | 23 | |
| n24 | | | 23 | |
| n25 | | | 23 | |
| n30 | | | 23 | |
| n34 | | 26 | 23 | |

(continued)

| NR band | Class 1.5 (dBm) | Class 2 (dBm) | Class 3 (dBm) | Class 4 (dBm) |
|---|---|---|---|---|
| n38 | | | 23 | |
| n39 | | 26 | 23 | |
| n40 | | | 23 | |
| n41 | 29 | 26 | 23 | |
| n48 | | | 23 | |
| n66 | | | 23 | |
| n70 | | | 23 | |
| n71 | | | 23 | |
| n77 | 29 | 26 | 23 | |
| n78 | 29 | 26 | 23 | |
| n79 | 29 | 26 | 23 | |
| n80 | | | 23 | |
| n84 | | | 23 | |
| n95 | | 26 | 23 | |
| n97 | | 26 | 23 | |
| n98 | | 26 | 23 | |
| n99 | | | 23 | |

When the UE power class supported by the terminal device is the power class 3 in Table 3, the terminal device supports the UL MIMO in the closed-loop spatial multiplexing mode, and value ranges of an MPR corresponding to the power class 3 are shown in Table 4. Value ranges of a dual radio frequency chain (transmitter, TX) MPR corresponding to the power class 2 are shown in Table 5, and value ranges of a single radio frequency chain (transmitter, TX) MPR corresponding to the power class 2 are shown in Table 6. It can be seen that, some value ranges of the MPR corresponding to the power class 3 are smaller than value ranges of the MPR corresponding to the power class 2. For example, for the terminal device at a band edge, when the terminal device performs the uplink transmission in a cyclic prefix (cyclic prefix, CP)-OFDM waveform and QPSK modulation, a value range of the MPR corresponding to the power class 3 is ≤3, and a value range of the dual-Tx MPR corresponding to the power class 2 is ≤4.

Table 4 Ranges of the MPR corresponding to the power class 3

| Modulation | | MPR (dB) | | |
|---|---|---|---|---|
| | | Edge RB allocation | Outer RB allocation | Inner RB allocation |
| DFT-s-OFDM | Pi/2 BPSK | ≤3.5 | ≤1.2 | ≤0.2 |
| | | | | |
| | | ≤0.5 | ≤0.5 | 0 |
| | Pi/2 BPSK w Pi/2 BPSK DMRS | ≤0.5 | $0^2$ | 0 |
| | QPSK | ≤1 | | 0 |
| | 16 QAM | ≤2 | | ≤1 |
| | 64 QAM | ≤2.5 | | |
| | 256 QAM | ≤4.5 | | |

(continued)

| Modulation | | MPR (dB) | | |
|---|---|---|---|---|
| | | Edge RB allocation | Outer RB allocation | Inner RB allocation |
| CP-OFDM | QPSK | ≤3 | | ≤1.5 |
| | 16 QAM | ≤3 | | ≤2 |
| | 64 QAM | ≤3.5 | | |
| | 256 QAM | ≤6.5 | | |

Table 5 Dual Tx MPR corresponding to the power class 2

| Modulation | | MPR (dB) | | |
|---|---|---|---|---|
| | | Edge RB allocation | Outer RB allocation | Inner RB allocation |
| DFT-s-OFDM | Pi/2 BPSK | ≤3.5 | ≤1 | 0 |
| | QPSK | ≤3.5 | ≤2 | 0.5 |
| | 16 QAM | ≤3.5 | ≤2.5 | ≤1.5 |
| | 64 QAM | ≤3.5 | ≤3 | |
| | 256 QAM | ≤5.5 | | |
| CP-OFDM | QPSK | ≤4.0 | ≤3.5 | ≤2 |
| | 16 QAM | ≤4.0 | ≤3.5 | ≤2.5 |
| | 64 QAM | ≤4.5 | | |
| | 256 QAM | ≤8.0 | | |

Table 6 Single Tx MPR corresponding to the power class 2

| Modulation | | MPR (dB) | | |
|---|---|---|---|---|
| | | Edge RB allocation | Outer RB allocation | Inner RB allocation |
| DFT-s-OFDM | Pi/2 BPSK | ≤3.5 | ≤0.5 | 0 |
| | QPSK | ≤3.5 | ≤1 | 0 |
| | 16 QAM | ≤3.5 | ≤2 | ≤1 |
| | 64 QAM | ≤3.5 | ≤2.5 | |
| | 256 QAM | ≤4.5 | | |
| CP-OFDM | QPSK | ≤3.5 | ≤3 | ≤1.5 |
| | 16 QAM | ≤3.5 | ≤3 | ≤2 |
| | 64 QAM | ≤3.5 | | |
| | 256 QAM | ≤6.5 | | |

In addition, Table 7 shows configuration information (for example, a physical uplink shared channel (physical uplink shared channel, PUSCH) configuration for uplink full power transmission) that needs to be supported when the terminal device supports the uplink full power transmission (full power transmission, ULFPTx) for the UL MIMO.

Table 7 PUSCH configuration for the uplink full power transmission

| ULFPTx Mode | Transmission scheme | DCI format | Modulation | Number of layers | Number of Tx Port | TPMI index |
|---|---|---|---|---|---|---|
| Mode-1 | Codebook based uplink | DCI format 0_1 | DFT-s-OFDM, and CP-OFDM | 1 | 2 | 2 |
| Mode-2 | Codebook based uplink | DCI format 0_1 | DFT-s-OFDM, and CP-OFDM | 1 | 2 | 0 or 1 |
| Modefull power | Codebook based uplink | DCI format 0_1 | DFT-s-OFDM, and CP-OFDM | 1 | 2 | 0 and 1 |

2. A transmit power, also referred to as a transmission power, may be understood as a transmit power used by a terminal device for sending first uplink transmission.

3. A maximum transmission power, also referred to as a maximum transmit power, may be understood as a transmission power upper limit that can be used when the terminal device sends first uplink transmission. In embodiments of this application, an upper limit value and a lower limit value of the maximum transmit power may be determined based on a maximum UE power, an MPR, and an A-MPR that correspond to a UE power class, a power class adjustment value of the terminal device, and a power value configured by a network device for the terminal device.

The lower limit value of the maximum transmit power and the upper limit value of the maximum transmit power satisfy the following formulas:

$$P_{CMAX\_L, f, c} = MIN\{P_{EMAX, c} - \Delta T_{C, c}, (P_{PowerClass} - \Delta P_{PowerClass}) - MAX(MAX(MPR_c + \Delta MPR_c, A\text{-}MPR_c) + \Delta T_{IB, c} + \Delta T_{C, c} + \Delta T_{RxSRS}, P\text{-}MPR_c)\};$$

and

$$P_{CMAX\_H, f, c} = MIN\{P_{EMAX, c}, P_{PowerClass} - \Delta P_{PowerClass}\}.$$

Herein, a value of the maximum transmission power $P_{CMAX, f, c}$ satisfies $P_{CMAX\_L, f, c} \leq P_{CMAX, f, c} \leq P_{CMAX\_H, f, c}$, $P_{CMAX\_L, f, c}$ is the lower limit value of the maximum transmit power, $P_{CMAX\_H, f, c}$ is the upper limit value of the maximum transmit power, $P_{PowerClass}$ is the maximum UE power corresponding to the UE power class, $P_{EMAX, c}$ is the power value configured by the network device for the terminal device, and $\Delta P_{PowerClass}$ is the power class adjustment value of the terminal device; $MPR_c$ is the MPR corresponding to the UE power class, and $\Delta MPR_c$ is a predefined value; and A-MPR$_c$ is the A-MPR corresponding to the UE power class, P-MPR$_c$ represents a preset maximum output power reduction, $\Delta T_{C, c}$ is a predefined value, $\Delta T_{IB, c}$ represents an additional tolerance for a serving cell c, and $\Delta T_{RxSRS}$ is related to an antenna port and an antenna configuration.

A value of $\Delta MPR$ is related to a frequency band and a channel bandwidth that are used by the terminal device. For example, the value of $\Delta MPR$ is set to 0 at a channel bandwidth $\leq 4\%$ in a time division duplex (Time Division Duplex, TDD) frequency band, or at a channel bandwidth $\leq 3\%$ in a frequency division duplex (Frequency Division Duplex, FDD) frequency band; or the value of $\Delta MPR$ is set according to Table 8 at a related channel bandwidth $> 4\%$ in a TDD frequency band; or at a related channel bandwidth $> 3\%$ in an FDD frequency band.

Table 8 Values of $\Delta MPR$

| NR frequency band | Power class | 25 MHz, 30 MHz | $\Delta MPR$ (dB) |
|---|---|---|---|
| n28 and n83 | Power class 3 | 30 MHz | 0.5 |
| n40 and n97 | Power class 3 and power class 2 | 100 MHz | 1 |

4. A transmit (transmitter, TX) channel is a physical concept, and may also be referred to as a radio frequency (radio frequency, RF) transmit channel. In this application, the transmit channels all are referred to as radio frequency chains for short. In this application, the transmit channel may operate in, but not limited to, the following manner: The transmit channel may receive a baseband signal from a baseband chip, perform radio frequency processing (such as upconversion, amplification, and filtering) on the baseband signal to obtain a radio frequency signal, and finally radiate the radio frequency signal to space through an antenna. Specifically, the transmit channel may include electronic components such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic components may be integrated into one or more chips according to a requirement. The antenna may also be considered as a part of the transmit channel sometimes. Optionally, the radio frequency chain in this application may be replaced with the Tx, the antenna, a radio frequency, the transmit channel, a sending port, a receive channel, or any combination thereof.

It should be understood that in embodiments of this application, "at least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following (items) pieces" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

In addition, it should be understood that in descriptions of this application, words such as "first" and "second" are merely intended for purposes of description, should not be understood as an indication or implication of relative importance, should not be understood as an indication or implication of a sequence, and should not be understood as a number.

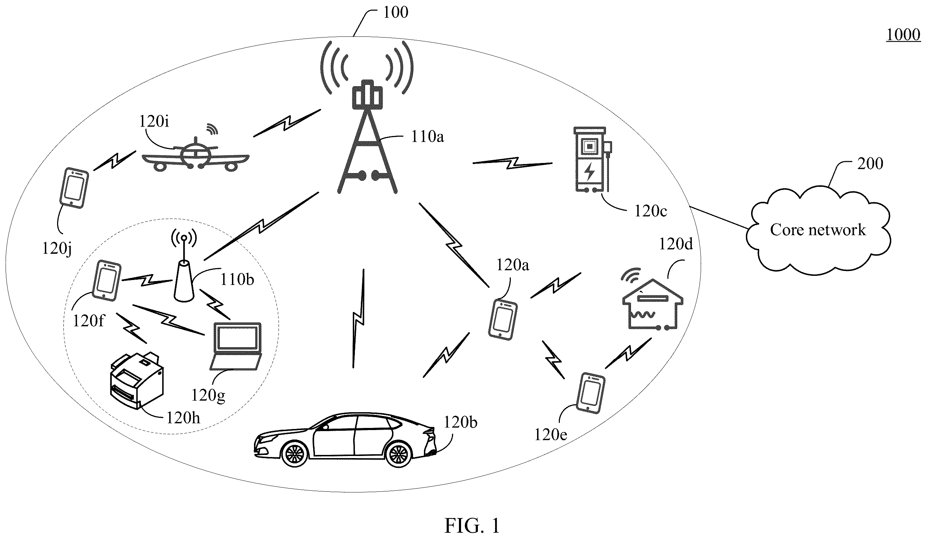

FIG. 1 is a diagram of an architecture of a communication system 1000 to which an embodiment of this application is applicable. As shown in FIG. 1, the communication system includes a radio access network 100 and a core network 200. The radio access network 100 may include at least one network device (for example, 110a and/or 110b in FIG. 1), and may further include at least one terminal device (for example, at least one of 120a to 120j in FIG. 1). The terminal device is connected to the access network device in a wireless manner, and the access network device is connected to the core network in a wireless or wired manner. Terminal devices may be connected to each other and network devices may be connected to each other in a wired or wireless manner. FIG. 1 is merely a diagram. The communication system may further include other network devices, for example, may further include a wireless relay device and a wireless backhaul device, which are not shown in FIG. 1.

The network device is a network side device having a wireless transceiver function. The network device may be an apparatus that is in the radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a medium access control (medium access control, MAC) layer of the base station, and may further complete some or all of functions of a physical layer. For detailed descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the following provides descriptions by using an example in which a base station serves as the network device.

The terminal device is a user-side device with a wireless transceiver function. The terminal device may also be referred to as user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. In addition, in embodiments of this application, the terminal device may further include a sensor, for example, an intelligent printer, a train detector, or a gas station. Main functions of the sensor include collecting data (some terminal devices), receiving control information and downlink data of a network device, sending an electromagnetic wave, and transmitting uplink data to the network device. A specific technology and a specific apparatus form that are used by the terminal device are not limited in embodiments of this application. In embodiments of this application, an example in which a terminal serves as the terminal device is used for description.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between base stations, or between terminals may be performed by using a licensed spectrum, may be performed by using an unlicensed spectrum, or may be performed by using both a licensed spectrum and an unlicensed spectrum. Communication may be performed by using a spectrum below 1 gigahertz (gigahertz, GHz), may be performed by using a spectrum above 1GHz, or may be performed by using both a spectrum below 1GHz and a spectrum above 1GHz. In embodiments of this application, the base station and the terminal communicate with each other by using a spectrum resource below 1 GHz.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

A communication method provided in this application is applied to various communication systems, for example, internet of things (internet of things, IoT), narrowband internet of things (narrowband internet of things, NB-IoT), long term evolution (long term evolution, LTE), a 5th generation (5G) communication system, an LTE and 5G hybrid architecture, a 5G new radio (new radio, NR) system, and a new communication system emerging in future communication development. The 5G communication system in this application may include at least one of a non-standalone (non-standalone, NSA) 5G communication system and a standalone (standalone, SA) 5G communication system. The communication system may alternatively be a public land mobile network (public land mobile network, PLMN) network, a device-to-device (device-to-device, D2D) network, a machine to machine (machine to machine, M2M) network, or another network.

The network architecture and the service scenario described in embodiments of this application are intended to describe technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes the method provided in embodiments of this application in detail with reference to the accompanying drawings. The method provided in embodiments of this application is applied to the communication architecture shown in FIG. 1. A terminal device can flexibly adjust a transmit power for uplink transmission by using the method provided in embodiments of this application, and adjust performance of the uplink transmission.

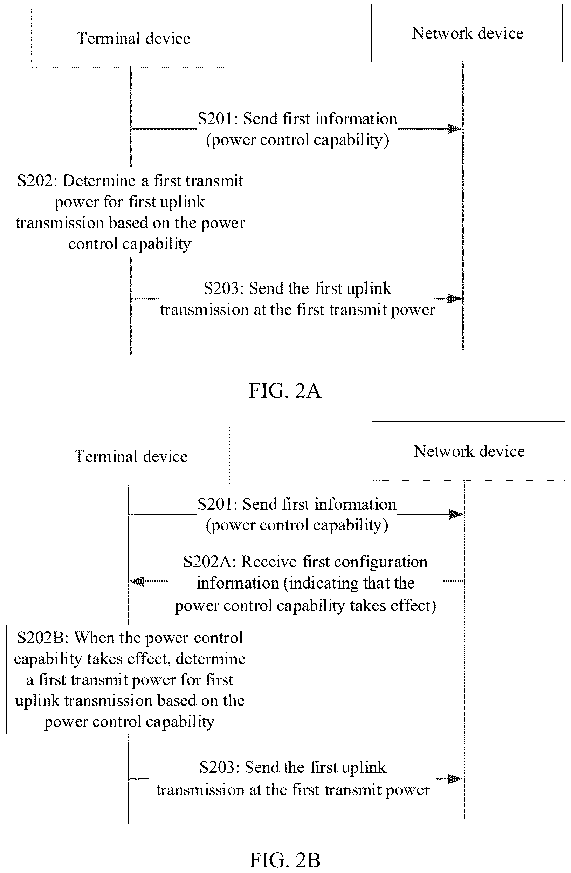

For example, FIG. 2A is a schematic flowchart of a communication method according to an embodiment of this application. The method includes the following steps.

S201: A terminal device sends first information, where the first information indicates a power control capability supported when the terminal device sends first uplink transmission in a UL MIMO mode in a first frequency band. Correspondingly, a network device receives the first information.

In embodiments of this application, the terminal device supports a first power class, and a frequency corresponding to the first frequency band is lower than 1 GHz. Therefore, in step S201, the terminal device can report, to the network device, the power control capability supported when the terminal device sends the first uplink transmission in the UL MIMO mode in the first frequency band. In this way, when the terminal device supports the first power class and the frequency corresponding to the first frequency band is lower than 1 GHz, the terminal device can determine a transmit power for the first uplink transmission based on the power control capability, and flexibly adjust the transmit power for the first uplink transmission, so that the transmit power for the uplink transmission is not limited to a maximum UE power corresponding to the first power, to adjust performance of the uplink transmission.

Optionally, as shown in FIG. 2B, after receiving the first information, the network device may send first configuration information to the terminal device, where the first configuration information indicates allowing the power control capability indicated by the first information reported by the terminal device to take effect. Optionally, when the first configuration information is set to 1, it indicates that the power control capability takes effect; or when the first configuration information is set to 0 or the network device does not send the first configuration information, it indicates that the power control capability does not take effect.

In a possible implementation, the power control capability includes increasing a transmission power of the terminal device when the terminal device supports the UL MIMO mode in the first frequency band. The "transmission power" may be understood as a transmit power for the uplink transmission of the terminal device, for example, a first transmit power. In this way, the terminal device can use a large transmit power when sending the uplink transmission in the UL MIMO mode in the first frequency band, to improve performance of the uplink transmission.

In embodiments of this application, an upper limit value and a lower limit value of a maximum transmission power of the first uplink transmission may be determined based on a maximum UE power, an MPR, and an A-MPR that correspond to a UE power class, a power class adjustment value of the terminal device, and a power value configured by the network device for the terminal device. Correspondingly, a first transmit power used when the terminal sends the first uplink transmission may be any value in a value range corresponding to the upper limit value and the lower limit value of the maximum transmission power, that is, the first transmit power is higher than or equal to the lower limit value of the maximum transmission power, and is lower than or equal to the upper limit value of the maximum transmission power. The maximum transmission power of the first uplink transmission is not higher than the upper limit value and is not lower than the lower limit value.

In embodiments of this application, there are a plurality of implementations for increasing the transmit power of the terminal device when the first frequency band supports the UL MIMO mode. The implementations may include but are not limited to the following manners.

Implementation 1: When the maximum transmission power of the uplink transmission is determined, a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and a maximum UE power corresponding to the first power class is lower than a maximum UE power corresponding to the second power class.

It can be learned from the foregoing description that the MPR and the A-MPR are parameters for determining the transmit power for the uplink transmission of the terminal device, some value ranges of the MPR corresponding to the first power class are greater than some value ranges of the MPR corresponding to the second power class, and some value ranges of the A-MPR corresponding to the first power class are greater than some value ranges of the A-MPR corresponding to the second power class. Therefore, in Implementation 1, a value range of an MPR corresponding to a power class with a lower maximum UE power (namely, the first power class) is set to a value range of an MPR corresponding to a power class with a lower maximum UE power (namely, the second power class), and/or a value range of an A-MPR corresponding to a power class with a lower maximum UE power is set to a value range of an A-MPR corresponding to a power class with a lower maximum UE power, so that the terminal device supporting the first power class can obtain a large transmit power when sending the uplink transmission, to improve performance of the uplink transmission.

Optionally, the maximum UE power $P_{PowerClass}$ corresponding to the first power class is 23 dBm, and the maximum UE power $P_{PowerClass}$ corresponding to the second power class is 26 dBm. The maximum UE power $P_{PowerClass}$ corresponding to the first power class is 23 dBm, that is, the first power class is a power class 3; and the maximum UE power corresponding to the second power class is 26 dBm, that is, the second power class is a power class 2. Correspondingly, the power control capability reported by the terminal device to the network device includes: When the terminal device supporting the power class 3 sends the first uplink transmission in the UL MIMO mode in the frequency band lower than 1 GHz, a value range of an MPR corresponding to the power class 3 is set to a value range of an MPR corresponding to the power class 2, and/or a value range of an A-MPR corresponding to the power class 3 is set to a value range of an A-MPR corresponding to the power class 2. In this way, before sending the first uplink transmission, the terminal device supporting the power class 3 can determine, based on the MPR and/or the A-MPR corresponding to the power class 2, the transmit power for the first uplink transmission, and flexibly adjust the transmit power for the first uplink transmission, so that the transmit power for the first uplink transmission is not limited by the maximum UE power corresponding to the power class 3. For the value ranges of the MPR corresponding to the power class 2, refer to Table 5 and Table 6 above. Details are not described herein again.

Implementation 2: Before determining the maximum transmission power of the uplink transmission, the terminal device receives second information, where the second information indicates a first power value $P_{EMAX, c}$ configured by the network device for the terminal device. Correspondingly, the network device sends the second information. Further, the terminal device increases the first power value $P_{EMAX, c}$ by 3 dB based on the power control capability, to obtain an increased power value, where the increased power value may be used to determine the maximum transmission power of the first uplink transmission.

The first power value may be used to determine a maximum transmission power of second uplink transmission. It should be understood that the second uplink transmission is sent by the terminal device, and is different from other uplink transmission of the first uplink transmission. Correspondingly, the second uplink transmission may be uplink transmission of the terminal device before sending of the first information; or the second uplink transmission may be uplink transmission sent by the terminal device in a second frequency band, and a frequency corresponding to the second frequency band is higher than or equal to 1 GHz; or the second uplink transmission may be uplink transmission sent by the terminal device in a non-UL MIMO mode in the first frequency band.

The second information may be carried in an additionalPmax field in a higher-layer parameter p-Max or a network signaling label mapping relationship NR-NS-PmaxList. In other words, the network device may configure the first power value $P_{EMAX, c}$ for the terminal device by using either of the two parameters, where p-Max is used to limit an uplink transmit power of UE in a carrier frequency.

For example, the terminal device may determine, according to the following formulas, the lower limit value of the maximum transmission power corresponding to the first uplink transmission and the upper limit value of the maximum transmission power corresponding to the first uplink transmission:

$$P_{CMAX\_L, f, c}=MIN\{(P_{EMAX, c}+3)-\Delta T_{C, c}, (P_{PowerClass}-\Delta P_{PowerClass})-MAX(MAX(MPR_c+\Delta MPR_c, A\text{-}MPR_c)+\Delta T_{IB, c}+\Delta T_{C, c}+\Delta T_{RxSR}s, P\text{-}MPR_c)\};$$

and

$$P_{CMAX\_H, f, c}=MIN\{(P_{EMAX, c}+3), P_{PowerClass}-\Delta P_{PowerClass}\}.$$

Correspondingly, a value of the maximum transmission power $P_{CMAX,f, c}$ satisfies $P_{CMAX\_L, f, c} \leq P_{CMAX, f, c} \leq P_{CMAX\_H, f, c}$.

$P_{CMAX\_L, f, c}$ is the lower limit value of the maximum transmission power, $P_{CMAX\_H, f, c}$ is the upper limit value of the maximum transmission power, $P_{PowerClass}$ is the maximum UE power corresponding to the UE power class, $P_{EMAX, c}$ is the first power value configured by the network device for the terminal device, and $\Delta P_{PowerClass}$ is the power class adjustment value of the terminal device; $MPR_c$ is the MPR corresponding to the UE power class, and $\Delta MPR_c$ is a predefined value; and $A\text{-}MPR_c$ is the A-MPR corresponding to the UE power class, $P\text{-}MPR_c$ represents a preset maximum output power reduction, $\Delta T_{C, c}$ is a predefined value, $\Delta T_{IB, c}$ represents an additional tolerance for a serving cell c, and $\Delta T_{RxSRS}$ is related to an antenna port and an antenna configuration.

In this way, the first power value $P_{EMAX, c}$ configured by the network device for the terminal device is increased by 3 dB, and then the maximum transmission power corresponding to the first uplink transmission is determined, so that the upper limit value and the lower limit value of the maximum transmission power can be increased by 3 dB, to improve performance of the first uplink transmission.

It should be understood that the first power value $P_{EMAX, c}$ configured by the network device for the terminal device is increased by 3 dB, to improve performance of the first uplink transmission, is merely an example. In another possible embodiment, the first power value $P_{EMAX, c}$ configured by the network device for the terminal device may alternatively be increased by 1 dB or 2 dB. This can also improve performance of the first uplink transmission.

Implementation 3: When the maximum transmission power of the uplink transmission is determined, a power class adjustment value $\Delta P_{PowerClass}$ of the terminal device is -3 dB.

It can be learned from the foregoing description that the power class adjustment value $\Delta P_{PowerClass}$ of the terminal device is a parameter of the maximum transmission power of the first uplink transmission. Therefore, in this implementation, a value of the power class adjustment value $\Delta P_{PowerClass}$ of the terminal device is adjusted, so that the upper limit value and the lower limit value of the maximum transmission power can be increased by 3 dB when the terminal device determines, based on the power class adjustment value $\Delta P_{PowerClass}$, the maximum transmission power corresponding to the first uplink transmission. Correspondingly, when sending the first uplink transmission, the terminal device may obtain a large transmit power, to improve performance of the first uplink transmission.

For example, the terminal device may determine, according to the following formulas, the lower limit value of the maximum transmission power corresponding to the first uplink transmission and the upper limit value of the maximum transmission power corresponding to the first uplink transmission:

$$P_{CMAX\_L, f, c}=MIN\{(P_{EMAX, c}+3)-\Delta T_{C, c}, (P_{PowerClass}-(-3))-MAX(MAX(MPR_c+\Delta MPR_c, A\text{-}MPR_c)+L1T_{IB, c}+\Delta T_{C, c}+\Delta T_{RxSRS}, P\text{-}MPR_c)\};$$

and

$$P_{CMAX\_H, f, c}=MIN\{(P_{EMAX, c}+3), P_{PowerClass}-(-3)\}.$$

Correspondingly, a value of the maximum transmission power $P_{CMAX, f, c}$ satisfies $P_{CMAX\_L, f, c} \leq P_{CMAX, f, c} \leq P_{CMAX\_H, f, c}$, $P_{CMAX\_L, f, c}$ is the lower limit value of the maximum transmission power, $P_{CMAX\_H, f, c}$ is the upper limit value of the maximum transmission power, $P_{PowerClass}$ is the maximum UE power corresponding to the UE power class, $P_{EMAX, c}$ is the first power value configured by the network device for the terminal device, and $\Delta P_{PowerClass}$ is the power class adjustment value of the terminal device; MPRc is the MPR corresponding to the UE power class, and $\Delta$MPRc is a predefined value; and A-MPRc is the A-MPR corresponding to the UE power class, P-MPRc represents a preset maximum output power reduction, $\Delta T_{C, c}$ is a predefined value, $\Delta T_{IB, c}$ represents an additional tolerance for a serving cell c, and $\Delta T_{RxSRS}$ is related to an antenna port and an antenna configuration.

S202: The terminal device determines the first transmit power for the first uplink transmission based on the power control capability.

Still refer to FIG. 2B. After receiving the first information, the network device sends first configuration information to the terminal device, where the first configuration information indicates whether the power control capability takes effect. Correspondingly, step S202 specifically includes: S202A: The terminal device receives the first configuration information; and S202B: When the power control capability takes effect, determine the first transmit power for the first uplink transmission based on the power control capability. In this way, the terminal device can determine the first transmit power for the first uplink transmission. This meets a communication requirement of the network device.

Further, a process in which the terminal device determines the first transmit power for the first uplink transmission based on the power control capability may be that the terminal device determines the upper limit value and the lower limit value of the maximum transmission power of the first uplink transmission based on the power control capability and selects either of the upper limit value of the maximum transmission power and the lower limit value of the maximum transmission power as the first transmit power.

It can be learned from the foregoing description that the implementations for increasing the transmission power of the terminal device when the terminal device supports the UL MIMO mode in the first frequency band may include Implementation 1: When supporting the first power class, the terminal device may determine the maximum transmission power of the first uplink transmission by using the MPR and/or the A-MPR corresponding to the second power class, where the maximum UE power corresponding to the first power class is lower than the maximum UE power corresponding to the second power class; Implementation 2: The terminal device increases, by 3 dB, the first power value $P_{EMAX, c}$ configured by the network device for the terminal device, to obtain the increased power value, and determines the maximum transmission power of the first uplink transmission based on the increased power value; and Implementation 3: The power class adjustment value $\Delta P_{PowerClass}$ of the terminal device is set to -3 dB, and the maximum transmission power of the first uplink transmission is determined based on the power class adjustment value $\Delta P_{PowerClass}$.

Correspondingly, the power control capability reported by the terminal device to the network device may include any one of the following: Capability 1: When supporting the first power class, the terminal device may determine the maximum transmission power of the first uplink transmission by using the MPR and/or the A-MPR corresponding to the second power class; Capability 2: The terminal device may increase, by 3 dB, the first power value $P_{EMAX, c}$ configured by the network device for the terminal device, to obtain the increased power value, and determine the maximum transmission power of the first uplink transmission based on the increased power value; and Capability 3: The power class adjustment value $\Delta P_{PowerClass}$ of the terminal device is set to -3 dB, and the maximum transmission power of the first uplink transmission is determined based on the power class adjustment value $\Delta P_{PowerClass}$.

Further, a process in which the terminal device determines the upper limit value and the lower limit value of the maximum transmission power of the first uplink transmission based on the power control capability may be specifically that the terminal device determines, according to the following formulas, the lower limit value of the maximum transmission power corresponding to the first uplink transmission and the upper limit value of the maximum transmission power corresponding to the first uplink transmission:

$$P_{CMAX\_L, f, c} = MIN\{(P_{EMAX, c}+n)-\Delta T_{C, c}, (P_{PowerClass}-\Delta P_{PowerClass})-MAX(MAX(MPR_c+\Delta MPR_c, A\text{-}MPR_c)+\Delta T_{IB, c}+\Delta T_{C, c}+\Delta T_{RxSRS}, P\text{-}MPR_c)\};$$

and

$$P_{CMAX\_H, f, c} = MIN\{(P_{EMAX, c}+n), P_{PowerClass}-\Delta P_{PowerClass}\}.$$

Correspondingly, a value of the maximum transmission power $P_{CMAX, f, c}$ satisfies $P_{CMAX\_L, f, c} \leq P_{CMAX, f, c} \leq P_{CMAX\_H, f, c}$, $P_{CMAX\_L, f, c}$ is the lower limit value of the maximum transmission power of the first uplink transmission, $P_{CMAX\_H, f, c}$ is the upper limit value of the maximum transmission power of the first uplink transmission, $P_{PowerClass}$ is the maximum UE power corresponding to the first power class, $P_{EMAX, c}$ is the first power value configured by the network device for the terminal device, and $\Delta P_{PowerClass}$ is the power class adjustment value of the terminal device; MPRc is the MPR corresponding to the second power class, and $\Delta$MPRc is a predefined value; and A-MPRc is the A-MPR corresponding to the second power class, P-MPRc represents a preset maximum output power reduction, $\Delta T_{C,\,c}$ is a predefined value, $\Delta T_{IB,\,c}$ represents an additional tolerance for a serving cell c, and $\Delta T_{RxSRS}$ is related to an antenna port and an antenna configuration. For a specific value of $\Delta$MPRc, refer to the foregoing related description. Details are not described herein again. Optionally, n=0, 1, 2, or 3. It should be understood that when the terminal device determines the maximum transmission power of the first uplink transmission by using Capability 1 or Capability 2, a value of n is 0.

S203: The terminal device sends the first uplink transmission at the first transmit power in the UL MIMO mode in the first frequency band. Correspondingly, the network device receives the first uplink transmission.

Optionally, the power control capability reported by the terminal device to the network device may further include a capability related to uplink full power transmission (UL full power Tx, ULFPTx).

In a possible implementation, the power control capability includes that the terminal device supports the uplink full power transmission, but does not support an uplink full power mode configuration information (ul-FullPwrMode-r16) or uplink full power sending mode 2 transmission precoding matrix group (ul-FullPwrMode2-TPMIGroup-r16) feature, and supports transmit diversity TxD, the MPR corresponding to the first power class is a dual radio frequency chain MPR corresponding to the second power class; and the maximum UE power corresponding to the first power class is lower than the maximum UE power corresponding to the second power class. In this way, when the terminal device supports the transmit diversity TxD, the dual radio frequency chain MPR (refer to the foregoing Table 5) of the second power class corresponding to the first power class can be used to increase a transmit power, to improve performance of the uplink transmission.

In another possible implementation, when the power control capability includes that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and the maximum UE power corresponding to the first power class is lower than the maximum UE power corresponding to the second power class. In this way, when the terminal device does not support the transmit diversity TxD, the single radio frequency chain MPR (refer to the foregoing Table 6) of the second power class corresponding to the first power class can be used to increase a transmit power, to improve performance of the uplink transmission.

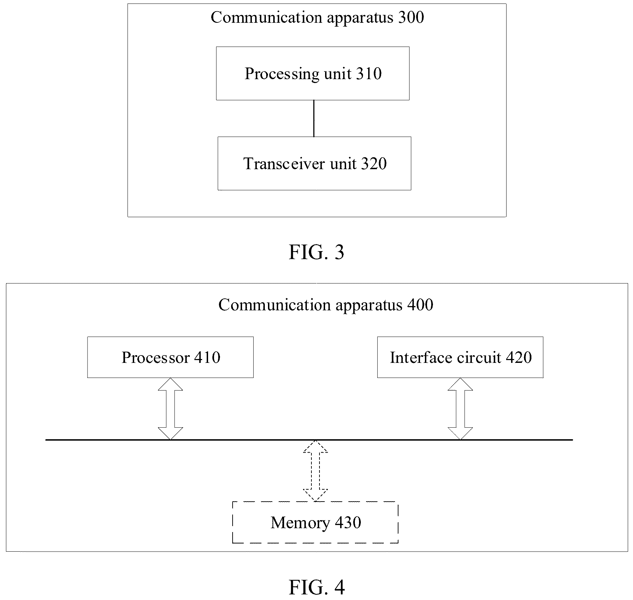

Based on a same concept with the foregoing embodiments, embodiments of this application further provide a communication apparatus. As shown in FIG. 3, a communication apparatus 300 includes a processing unit 310 and a transceiver unit 320. The communication apparatus 300 is configured to implement a function of the terminal device or the network device in the method embodiment shown in FIG. 2A.

When the communication apparatus 300 is configured to implement the function of the terminal device, the transceiver unit 320 is configured to send first information, where the first information indicates a power control capability supported when the terminal device sends first uplink transmission in an uplink multiple antenna transmission UL MIMO mode in a first frequency band, the terminal device supports a first power class, and a frequency corresponding to the first frequency band is lower than 1 GHz; the processing unit 310 is configured to determine a first transmit power for the first uplink transmission based on the power control capability; and the transceiver unit 320 is further configured to send the first uplink transmission at the first transmit power in the UL MIMO mode in the first frequency band.

In a design, the power control capability includes increasing a transmission power of the terminal device when the terminal device supports the UL MIMO mode in the first frequency band.

In a possible design, a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and a maximum UE power corresponding to the first power class is lower than a maximum UE power corresponding to the second power class.

In a possible design, the maximum UE power $P_{PowerClass}$ corresponding to the first power class is 23 dBm, and the maximum UE power corresponding to the second power class is 23 dBm.

In a possible design, the transceiver unit 320 is further configured to receive second information, where the second information indicates a first power value $P_{EMAX,\,c}$ configured by a network device for the terminal device; the first power value is used to determine a maximum transmission power of second uplink transmission; and the second uplink transmission is uplink transmission of the terminal device before sending of the first information; or the second uplink transmission is uplink transmission sent by the terminal device in a second frequency band, and a frequency corresponding to the second frequency band is higher than or equal to 1 GHz; or the second uplink transmission is uplink transmission sent by the terminal device in a non-UL MIMO mode in the first frequency band; and correspondingly the processing unit 310 is further configured to increase the first power value $P_{EMAX,\,c}$ by 3 dB, to obtain an increased power value, where the increased power value is used to determine the first transmit power.

In a possible design, a power class adjustment value $\Delta P_{PowerClass}$ of the terminal device is -3 dB.

In a possible design, when the power control capability includes that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and the maximum UE power corresponding to the first power class is lower than the maximum UE power corresponding to the second power class.

In a possible design, when the power control capability includes that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and the maximum UE power corresponding to the first power class is lower than the maximum UE power corresponding to the second power class.

In a possible design, the transceiver unit 320 is further configured to receive third information, where the third information indicates that the power control capability takes effect; and the processing unit 310 is specifically configured to determine, when the power control capability takes effect, the first transmit power for the first uplink transmission based on the power control capability.

In a possible design, the first transmit power is higher than or equal to a first value $P_{CMAX\_L, f, c}$ and lower than or equal to a second value $P_{CMAX\_H, f, c}$, where the first value $P_{CMAX\_L, f, c}$ and the second value $P_{CMAX\_H, f, c}$ satisfy the following formulas:

$$P_{CMAX\_L, f, c} = MIN\{(P_{EMAX, c}+n)-\Delta T_{C, c}, (P_{PowerClass}-\Delta P_{PowerClass})-MAX(MAX(MPR_c+\Delta MPR_c, A\text{-}MPR_c)+\Delta T_{IB, c}+\Delta T_{C, c}+\Delta T_{RxSR}s, P\text{-}MPR_c)\};$$

and

$$P_{CMAX\_H, f, c} = MIN\{(P_{EMAX, c}+n), P_{PowerClass}-\Delta P_{PowerClass}\}.$$

Correspondingly, a value of the maximum transmission power $P_{CMAX, f, c}$ satisfies $P_{CMAX\_L, f, c} \leq P_{CMAX, f, c} \leq P_{CMAX\_H, f, c}$, $P_{PowerClass}$ is a maximum UE power corresponding to the first power class, $P_{EMAX, c}$ is the first power value configured by the network device for the terminal device, $\Delta P_{PowerClass}$ is the power class adjustment value of the terminal device, $MPR_c$ is the MPR of the second power class, and $\Delta MPR_c$ is a predefined value; and $A\text{-}MPR_c$ is the A-MPR of the second power class, $P\text{-}MPR_c$ represents a preset maximum output power reduction, $\Delta T_{C, c}$ is a predefined value, $\Delta T_{IB, c}$ represents an additional tolerance for a serving cell c, and $\Delta T_{RXSRS}$ is related to an antenna port and an antenna configuration. Optionally, a value of n includes 1, 2, and 3.

When the communication apparatus 300 is configured to implement the function of the network device, the transceiver unit 320 is configured to receive first information, where the first information indicates a power control capability supported when a terminal device sends first uplink transmission in an uplink multiple antenna transmission UL MIMO mode in a first frequency band, the terminal device supports a first power class, and a frequency corresponding to the first frequency band is lower than 1 GHz; and the transceiver unit 320 is further configured to receive the first uplink transmission.

In a possible design, the power control capability includes increasing a transmission power of the terminal device when the terminal device supports the UL MIMO mode in the first frequency band.

In a possible design, a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and a maximum UE power corresponding to the first power class is lower than a maximum UE power corresponding to the second power class.

In a possible design, the maximum UE power PPowerClass corresponding to the first power class is 23 dBm, and the maximum UE power corresponding to the second power class is 23 dBm.

In a possible design, a power class adjustment value $\Delta P_{PowerClass}$ of the terminal device is -3 dB.

In a possible design, when the power control capability includes that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and the maximum UE power corresponding to the first power class is lower than the maximum UE power corresponding to the second power class.

In a possible design, when the power control capability includes that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and the maximum UE power corresponding to the first power class is lower than the maximum UE power corresponding to the second power class.

In a possible design, the transceiver unit 320 is further configured to send third information, where the third information indicates that the power control capability takes effect.

For more detailed descriptions of the processing unit 310 and the transceiver unit 320, directly refer to related descriptions in the method embodiment shown in FIG. 2A or FIG. 2B. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related descriptions in the method embodiments.

In a possible manner, the communication apparatus may be a communication device or a chip in a communication device. The communication device may be a terminal device, or may be a network device. As shown in FIG. 4, a communication apparatus 400 includes a processor 410. Optionally, the communication apparatus 400 may further include an interface circuit 420. The processor 410 and the interface circuit 420 are coupled to each other. It may be understood that the interface circuit 420 may be a transceiver or an input/output interface.

Optionally, the communication apparatus 400 may further include a memory 430, configured to store instructions to be executed by the processor 410, store input data for running instructions by the processor 410, or store data generated after the processor 410 runs instructions. The memory 430 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory 430 is any other medium that can carry or store expected program code in a form of an instruction or a data structure and that can be accessed by a computer, but is not limited thereto. The processor 410 is configured to execute the program code stored in the memory 430, and is specifically configured to perform an action of the processing unit 310. Details are not described herein again in this application. The interface circuit 420 is specifically configured to perform an action of the transceiver unit 320. Details are not described herein in this application.

A specific connection medium between the processor 410, the interface circuit 420, and the memory 430 is not limited in embodiments of this application. For example, the processor 410, the interface circuit 420, and the memory 430 are connected through a bus. The bus is represented by a thick line in FIG. 4. A connection manner between other components is merely an example for description, and is not limited thereto. The bus may be classified into an address bus, a data bus, a control bus, and the like. For ease of representation, only one thick line is used to represent the bus in FIG. 4, but this does not mean that there is only one bus or only one type of bus.

In a first implementation, the communication apparatus 400 may be configured to implement the method corresponding to the terminal device in the foregoing embodiment of this application. For details, refer to the descriptions in the foregoing embodiment.

In a second implementation, the communication apparatus 400 may be configured to implement the method corresponding to the network device in the foregoing embodiment of this application. For details, refer to the descriptions in the foregoing embodiment.

When the communication apparatus 400 is configured to implement the method shown in FIG. 2A or FIG. 2B, the processor 410 is configured to implement a function of the foregoing processing unit 310, and the interface circuit 420 is configured to implement a function of the foregoing transceiver unit 320.

When the communication apparatus is a chip used in a terminal, the chip in the terminal implements a function of the terminal in the foregoing method embodiment. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to a network device.

When the communication apparatus is a module used in a network device, the module in the network device implements a function of the network device in the foregoing method embodiment. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application further provides a computer-readable storage medium. The computer-readable storage medium stores a computer program or instructions. When the computer program or the instructions are run, the method performed by the network device or the terminal device in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory ROM, a random access memory RAM, a magnetic disk, or an optical disc.

This application further provides a computer program product. The computer program product includes computer program code. When the computer program code is run on a computer, the computer is enabled to perform the method performed by the terminal device or the network device in any one of the foregoing method embodiments.

This application further provides a system. The system includes an apparatus for performing the function of the foregoing terminal device and an apparatus for performing the function of the foregoing network device.

An embodiment of this application further provides a processing apparatus, including a processor and an interface. The processor is configured to perform the method performed by the terminal device or the network device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, comprising:

   sending, by a terminal device, first information, wherein the first information indicates a power control capability supported when the terminal device sends first uplink transmission in an uplink multiple antenna transmission UL MIMO mode in a first frequency band, the terminal device supports a first power class, and a frequency corresponding to the first frequency band is lower than 1 GHz;

determining, by the terminal device, a first transmit power for the first uplink transmission based on the power control capability; and

sending, by the terminal device, the first uplink transmission at the first transmit power in the UL MIMO mode in the first frequency band.

2. The method according to claim 1, wherein the power control capability comprises increasing a transmission power of the terminal device when the terminal device supports the UL MIMO mode in the first frequency band.

3. The method according to claim 1 or 2, wherein a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and

a maximum UE power corresponding to the first power class is lower than a maximum UE power corresponding to the second power class.

4. The method according to claim 3, wherein the maximum UE power $P_{PowerClass}$ corresponding to the first power class is 23 dBm, and the maximum UE power corresponding to the second power class is 26 dBm.

5. The method according to claim 1 or 2, wherein the method further comprises:

receiving, by the terminal device, second information, wherein the second information indicates a first power value $P_{EMAX,\,c}$ configured by a network device for the terminal device; the first power value is for determining a maximum transmission power of second uplink transmission; and the second uplink transmission is uplink transmission of the terminal device before sending of the first information; or the second uplink transmission is uplink transmission sent by the terminal device in a second frequency band, and a frequency corresponding to the second frequency band is higher than or equal to 1 GHz; or the second uplink transmission is uplink transmission sent by the terminal device in a non-UL MIMO mode in the first frequency band; and

increasing, by the terminal device, the first power value $P_{EMAX,\,c}$ by 3 dB, to obtain an increased power value, wherein the increased power value is for determining the first transmit power.

6. The method according to claim 1 or 2, wherein a power class adjustment value $\Delta P_{PowerClass}$ of the terminal device is -3 dB.

7. The method according to any one of claims 1 to 6, wherein when the power control capability comprises that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and

the maximum UE power corresponding to the first power class is lower than the maximum UE power corresponding to the second power class.

8. The method according to any one of claims 1 to 6, wherein when the power control capability comprises that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and

the maximum UE power corresponding to the first power class is lower than the maximum UE power corresponding to the second power class.

9. The method according to any one of claims 1 to 8, wherein determining, by the terminal device, the first transmit power for the first uplink transmission based on the power control capability comprises:

receiving, by the terminal device, third information, wherein the third information indicates that the power control capability takes effect; and

when the power control capability takes effect, determining, by the terminal device, the first transmit power for the first uplink transmission based on the power control capability.

10. A communication method, comprising:

receiving, by a network device, first information, wherein the first information indicates a power control capability supported when a terminal device sends first uplink transmission in an uplink multiple antenna transmission UL MIMO mode in a first frequency band, the terminal device supports a first power class, and a frequency corresponding to the first frequency band is lower than 1 GHz; and

receiving, by the network device, the first uplink transmission.

11. The method according to claim 10, wherein the power control capability comprises increasing a transmission power of the terminal device when the terminal device supports the UL MIMO mode in the first frequency band.

12. The method according to claim 10 or 11, wherein a value range of a maximum power reduction MPR corresponding to the first power class is equal to a value range of an MPR corresponding to a second power class, and/or a value range of an additional maximum power reduction A-MPR corresponding to the first power class is equal to a value range of an A-MPR corresponding to a second power class; and

a maximum UE power corresponding to the first power class is lower than a maximum UE power corresponding to the second power class.

13. The method according to claim 12, wherein the maximum UE power $P_{PowerClass}$ corresponding to the first power class is 23 dBm, and the maximum UE power corresponding to the second power class is 26 dBm.

14. The method according to claim 10 or 11, wherein a power class adjustment value $\Delta P_{PowerClass}$ of the terminal device is -3 dB.

15. The method according to any one of claims 10 to 14, wherein when the power control capability comprises that the terminal device supports uplink full power transmission, but does not support an uplink full power mode configuration information or uplink full power sending mode 2 transmission precoding matrix group feature, and supports transmit diversity TxD, the MPR corresponding to the first power class is a dual radio frequency chain MPR corresponding to the second power class; and

the maximum UE power corresponding to the first power class is lower than the maximum UE power corresponding to the second power class.

16. The method according to any one of claims 10 to 14, wherein when the power control capability comprises that the terminal device supports uplink full power transmission, but does not support an uplink full power mode configuration information or uplink full power sending mode 2 transmission precoding matrix group feature, and does not support TxD, the MPR corresponding to the first power class is a single radio frequency chain MPR corresponding to the second power class; and

the maximum UE power corresponding to the first power class is lower than the maximum UE power corresponding to the second power class.

17. The method according to any one of claims 10 to 16, wherein the method further comprises:
sending, by the network device, third information, wherein the third information indicates that the power control capability takes effect.

18. A communication apparatus, comprising a unit configured to perform the method according to any one of claims 1 to 9.

19. A communication apparatus, comprising a unit configured to perform the method according to any one of claims 10 to 17.

20. A communication apparatus, comprising a processor, wherein the processor is configured to be coupled to a memory, and the processor is configured to execute a computer program or instructions stored in the memory, to enable the method according to any one of claims 1 to 9 or the method according to any one of claims 10 to 17 to be performed.

21. A computer-readable storage medium, wherein the storage medium stores a computer program or instructions, and when the computer program or the instructions are executed by a communication apparatus, the method according to any one of claims 1 to 9 or the method according to any one of claims 10 to 17 is implemented.

22. A communication system, comprising a communication apparatus configured to perform the method according to any one of claims 1 to 9 and a communication apparatus configured to perform the method according to any one of claims 10 to 17.

FIG. 1

```
┌─────────────────────┐                    ┌─────────────────────┐
│   Terminal device   │                    │   Network device    │
└─────────────────────┘                    └─────────────────────┘
          │                                           │
          │    S201: Send first information           │
          │───────────────────────────────────────────▶
          │      (power control capability)           │
          │                                           │
┌─────────────────────────────────┐                  │
│ S202: Determine a first transmit│                  │
│       power for first uplink    │                  │
│  transmission based on the power│                  │
│        control capability       │                  │
└─────────────────────────────────┘                  │
          │                                           │
          │      S203: Send the first uplink          │
          │───────────────────────────────────────────▶
          │ transmission at the first transmit power  │
          │                                           │
```

FIG. 2A

```
┌─────────────────────┐                    ┌─────────────────────┐
│   Terminal device   │                    │   Network device    │
└─────────────────────┘                    └─────────────────────┘
          │                                           │
          │    S201: Send first information           │
          │───────────────────────────────────────────▶
          │      (power control capability)           │
          │                                           │
          │  S202A: Receive first configuration       │
          ◀───────────────────────────────────────────
          │     information (indicating that the      │
          │  power control capability takes effect)   │
          │                                           │
┌─────────────────────────────────┐                  │
│ S202B: When the power control   │                  │
│ capability takes effect, determine                 │
│  a first transmit power for first                  │
│ uplink transmission based on the │                 │
│     power control capability     │                 │
└─────────────────────────────────┘                  │
          │                                           │
          │      S203: Send the first uplink          │
          │───────────────────────────────────────────▶
          │ transmission at the first transmit power  │
          │                                           │
```

FIG. 2B

Communication apparatus 300

Processing unit 310

Transceiver unit 320

FIG. 3

Communication apparatus 400

Processor 410

Interface circuit 420

Memory 430

FIG. 4

## INTERNATIONAL SEARCH REPORT

| International application No. |
|---|
| **PCT/CN2024/084494** |

| A. | CLASSIFICATION OF SUBJECT MATTER |
|---|---|

H04W 52/18(2009.01)i

According to International Patent Classification (IPC) or to both national classification and IPC

| B. | FIELDS SEARCHED |
|---|---|

Minimum documentation searched (classification system followed by classification symbols)

IPC:H04

Documentation searched other than minimum documentation to the extent that such documents are included in the fields searched

Electronic data base consulted during the international search (name of data base and, where practicable, search terms used)

3GPP, CNTXT, DWPI, ENTXT, OETXT, VEN, WPABS: 发送功率, 功率等级, 功率控制, 功率控制能力, 能力, 上行多天线传输, 最大功率回退, MIMO, mpr, Transmit Power, Power Class, Power Control, Power Control Capability

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111050390 A (TELECOMMUNICATIONS TECHNOLOGY RESEARCH INSTITUTE CO., LTD.) 21 April 2020 (2020-04-21)<br>description, pages 42-65 | 1-2, 6, 9-11, 14, 17-22 |
| A | CN 102300300 A (CHINA ACADEMY OF TELECOMMUNICATIONS TECHNOLOGY) 28 December 2011 (2011-12-28)<br>entire document | 1-22 |
| A | US 2022217654 A1 (LG ELECTRONICS INC.) 07 July 2022 (2022-07-07)<br>entire document | 1-22 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 June 2024** | **28 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084494**

| Patent document cited in search report | | | Publication date (day/month/year) | Patent family member(s) | | | Publication date (day/month/year) |
|---|---|---|---|---|---|---|---|
| CN | 111050390 | A | 21 April 2020 | US | 2022015039 | A1 | 13 January 2022 |
| | | | | US | 11516745 | B2 | 29 November 2022 |
| | | | | EP | 3866518 | A1 | 18 August 2021 |
| | | | | EP | 3866518 | A4 | 16 March 2022 |
| | | | | KR | 20210074350 | A | 21 June 2021 |
| | | | | KR | 102464288 | B1 | 04 November 2022 |
| | | | | WO | 2020073794 | A1 | 16 April 2020 |
| | | | | TW | 202015468 | A | 16 April 2020 |
| | | | | TWI | 757643 | B | 11 March 2022 |
| CN | 102300300 | A | 28 December 2011 | None | | | |
| US | 2022217654 | A1 | 07 July 2022 | WO | 2020218900 | A1 | 29 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310365094